# EUROPEAN PATENT SPECIFICATION

(11) **EP 0 261 232 B1**
(45) Date of publication and mention of the grant of the patent: **17.05.1995**
(21) Application number: 87902999.9
(22) Date of filing: 30.03.1987
(51) Int. Cl.: F16B 31/02

(54) **TORQUE LIMITING FASTENER**
BEFESTIGUNGSWERKZEUG MIT KOPPELBEGRENZUNG
ELEMENT DE FIXATION LIMITEUR DE COUPLE

(30) Priority: 31.03.1986 US 846302
(43) Date of publication of application: 30.03.1988
(73) Proprietor: Wing, Betty R., Redondo Beach, CA 90277 (US)
(72) Inventor: Wing, Betty R., Redondo Beach, CA 90277 (US)
(74) Representative: Grünecker, Kinkeldey, Stockmair & Schwanhäusser Anwaltssozietät
(86) International application number: US8700708
(87) International publication number: WO8705977

(56) References cited:
- US-A- 3 741 266
- US-A- 3 763 725
- US-A- 3 842 878
- US-A- 3 854 372
- US-A- 3 929 054
- US-A- 4 068 555
- US-A- 4 260 005
- US-A- 4 408 936
- US-A- 4 544 312

## Description

The present invention relates to a fastener having internal threads as defined in the preamble of claim 1 and to a method for setting this fastener.

A fastener of this type and a method of setting is disclosed in US-A-4 544 312. The known fastener is shaped as a collar and comprises three lobes circumferentially spaced at and extending from a cylindrical outer surface of the collar with the radial dimension of the lobes being greater than the radial dimension of the portions of the cylindrical surface of the collar between the lobes. The collar is adapted to be set by a standard deltoid socket driver having three flat sides. The distance between a tangent to adjacent lobes and the axis of the collar is smaller than the distance between the base of the trough and the axis, so that the cylindrical surface of the collar between the lobes contacts the flat sides of the driver, and the dimension of the load and the material strength of the collar is chosen so as to allow the driver to press the material of the lobes radially inwardly towards the axis of the collar in order to fill out fluids formed into the pin engaged by the collar.

US-A-3 763 275 discloses a fastener having a corrugated outer surface which requires a specifically adapted driver having an adequately corrugated inner surface. The dimension of the lobes and the strengths of the material for the collar are chosen to allow the lobes to fail by being broken away at the predetermined preload.

In a standard threaded fastener system of a male threaded fastener and a female threaded fastener, the female fastener has internal threads that thread onto external threads of the male fastener. Wrenching surfaces of both fasteners accept tools that tighten them and clamp one or more workpieces together between them, oftentimes with washers interposed in between. The combination of the fasteners and the workpieces are known as a "joint." Male threaded fasteners are variously known as "studs," "screws," "bolts," or "pins;" female threaded fasteners are variously known as "nuts" or "collars;" workpieces are sometimes called "sheets" or "structural elements."

Fasteners bear loads along their axes, tensile loads, and radially of the axes, shear loads. Tensile loading always exists because of the clamping force applied by the pin and the collar to the sheets; this load is known as "clamp-up" or "preload." When fasteners join two or more sheets and the sheets are loaded in their planes, one sheet may tend to slide over the other; when this loading of the sheets occurs, it is resisted by the fasteners, and the sheets load the fasteners in shear. Shear loads are transverse to the axes of the fasteners and transverse to the tension load. Cyclic loading of a fastener can produce fatigue failure. In aerospace applications fatigue failure is usually most critical in shear.

Adequate clamp-up or preload is absolutely necessary for a satisfactory joint. A fastener adequately loaded by the reaction to the clamp-up load resists fatigue failure. Preload also helps the structural elements to resist fatigue failure. Accordingly, it is desirable to know the clamp-up load the fastener applies to a structure to be sure that a joint has adequate fatigue strength. Adequate clamp-up also avoids sheet slippage and fretting and insures against load shifting and joint failure.

Clamp-up load correlates to the resistance of a collar to further threading onto a pin and against a workpiece by the application of torque to the collar. As clamp-up force increases, the resistance to further threading increases, and the torque required to turn the collar increases.

This fact has been used in fasteners to develop a predetermined clamp-up load by termination of tightening through failure of a wrenching section on the collar. US-A- 2,940,495 to G.S. Wing and US-A- 4,260,005 to Edgar Stencel describe two types of such fasteners.

The Wing patent describes a collar extensively used in the aerospace industry. It has a wrenching section connected to an internally threaded section by a frangible breakneck collar. The collar breaks upon the application of a predetermined torque that corresponds to a desired clamp-up load. An acircular portion of the threaded section provides a thread lock by pressing tightly against the threads of the cooperating pin. A problem with this type of fastener is that it generates a waste piece: the wrenching section. The waste piece must be removed from the environment where the fastener is set. This type of fastener is also comparatively expensive because it requires a considerable amount of machining to make it, and the frangible breakneck must be held to very close tolerances to provide close tolerances in breakoff torques.

The Stencel patent describes a collar that has a plurality of circumferentially spaced lobes on its axial outside that serve as wrenching surfaces and in torque limitation. A wrenching tool, say a triangular shaped socket, has flats that engage flanks of the lobes and turn the collar with respect to the pin. Upon reaching a predetermined clamp-up load, the lobes fail in radial compression and merge into the body of the collar, and wrenching and tightening stops because the lobes no longer provide purchase for the setting tool. The Stencel collar produces a thread lock by a deformation of collar material radially inward of the lobes against the threads of a cooperating pin when the lobes fail.

Impact wrenches used in setting fasteners do so rapidly. The failures of the breakneck of the Wing fastener and of the lobes of the Stencel fastener occur over very few degrees of rotation, and, when an impact wrench is used, occur very rapidly. The rapid application of setting torques to a collar can result in loss of some desired preload through relaxation of the sheets; relaxation results from the continued deformation of the sheets after the initial loading. Sheet relaxation usually happens as a result of more than one fastener being necessary to pull all the parts together. Such deformation reduces the load per unit area and absolute loading because material moves away from the clamped zone. When the breakneck or the lobes fail, they fail at a torque corresponding to a desired preload. But the loaded sheets can relax and some of the preload lost. This relaxation is a time-dependent phenomenon, and with slower development of preload, relaxation and loss of preload will be less.

It may also be desirable to be able to change the preload even with the same collar. For example, when the sheets are not as strong in compression as some other sheets, it may be necessary to lower the compressive load on them.

In some applications secondary wrenching is desired in order to increase preload above design preload or to compensate for relaxation. Secondary wrenching is impossible in the standard configurations of the Wing and Stencel collars. These collars are also difficult to remove after they have been set because of the absence of wrenching sections.

In some applications because of space limitations straight-on wrenching is impossible and wrenching must be done from the side of the collar, say, with an open end wrench.

The present invention as defined in claim 1 provides a female fastener that can be installed or removed with standard wrenches, say a hexagonal socket, or with a ball drive socket. When driven with a ball drive socket, lobes of the collar fail upon reaching a predetermined preload by one or more balls of the driver plowing a furrow through them. A ball drive socket can also act against the lobes to tighten the collar to a predetermined preload and leave Brinnell marks as a signature that tightening the desired amount has occurred.

The present invention contemplates a female fastener or nut having internal threads and a plurality of axially extending lobes with arcuate external surfaces. These lobes provide wrenching purchase for either spherically curved wrenching elements or flat surfaced wrenching tools such as hexagonal sockets or end wrenches. Troughs between the lobes permit the spherically curved wrenching elements to bear on the flanks of the lobes.

The lobes lie within an imaginary regular geometric figure having straight sides, say a hexagon. Each side of the figure strikes a tangent to the surfaces of two successive lobes so that the lobes can accept a flat sided wrenching tool.

In a particular form, a right cylindrical surface concentric with the axis of the nut defines the surface of the troughs, the lobes extending radially outward from this surface at regular intervals. The lobes themselves have surfaces lying on tangent cylinders arrayed in a regular pattern with the axes of the cylinders lying on a second cylindrical surface concentric with the axis of the nut and having a radius smaller than the radius of the defining cylinder for the trough surfaces. Preferably, the nut has six lobes. It is also preferred that the nut have a base below the lobes with a counterbore for receiving imperfect thread convolutions of a male fastener, as is standard in many nuts or collars.

The lobed fastener of this invention accepts wrenching by either a flat sided wrench or a ball drive. The fastener can be re-wrenched and removed by wrenching. When driven with a ball drive, the fastener signs when it has been tightened the desired amount either by Brinnell marks or circumferential furrows.

These and other features, aspects, and advantages of the present invention will become more apparent from the following description, appended claims and drawings.
FIGURE 1 shows the preferred form of the nut of this invention in elevation;
FIGURE 2 shows the nut of Figure 1 in top plan;
FIGURE 3 shows the nut of Figure 1 in top plan being wrenched by a flat side wrenching tool;
FIGURE 4 shows the nut of Figure 1 in elevation set in a joint with circumferential furrows in its lobes; and
FIGURE 5 shows the nut of Figure 1 in elevation set in a joint with Brinnell marks in its lobes.

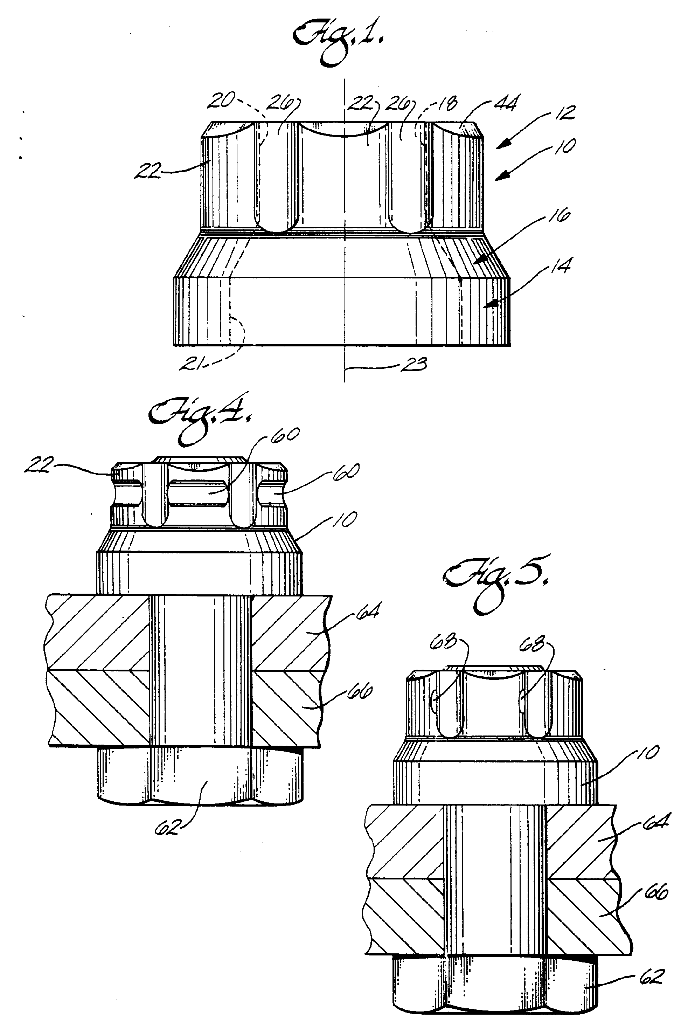

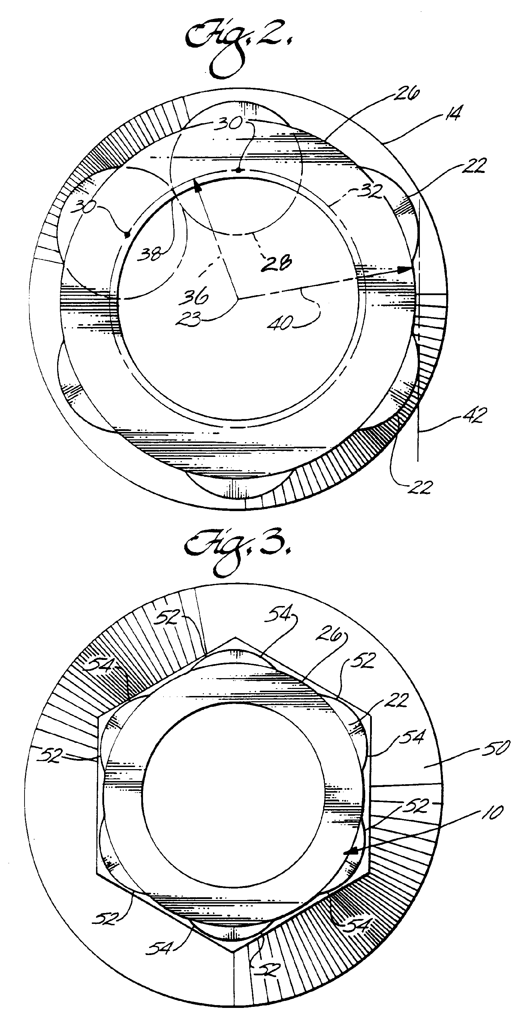

Figures 1 and 2 show the preferred form of a nut 10 made in accordance with the present invention. In general, the nut has a wrenching section 12, a base 14, and a transition section 16. An axial bore 18 through the nut has a threaded section 20 and a counterbore 21. The nut has an axis 23.

The wrenching section has a plurality of wrenching lobes 22 extending axially the length of the section. Each lobe has an arcuate, axially extending external surface. Troughs 26 extend axially the length of the wrenching section between adjacent lobes; the external surfaces or troughs 26 lie on a common right cylinder.

Figure 2 shows best the geometry of the lobes and troughs. Lobes 22 have external cylindrical surfaces defined by the surfaces of tangent cylinders 28. These cylinders have parallel axes 30 that lie on a cylinder 32 that is concentric with axis 23 of the nut; axes 30 are also parallel to axis 23. An arrow 36 is the radius of cylinder 32. The tangency of cylinders 28 is shown at 38. All of the other lobes also have generating cylinders that have the same relationship as cylinders 28 to each other and to the nut.

Troughs 26 fall on the surface of a right cylinder having an axis concentric with axis 23 and having a radius 40. Radius 40 is larger than radius 36, and so troughs 26 meet cylinders 28 well out from cylinder axis 30 towards the outside of the nut.

A tangent line 42 between adjacent lobes is spaced radially from the surface of troughs 26. Line 42 represents the position of a wrenching surface against the lobes of a flat sided wrenching tool such as an end wrench.

The top of the lobe has a slight chamfer 44 to facilitate the insertion of a wrenching tool onto the nut.

Figure 3 shows nut 10 accepting a wrenching socket 50. The flats on the socket bear on the lobes about at tangency points 52 during tightening and at tangency points 54 during loosening. Troughs 26 lie on a cylinder inside of the wrenching surfaces of the socket and spaced from such surfaces.

When driven with a ball socket, the balls track on troughs 26 and bear against lobes 22. A suitable driver is shown in the parent to this application. Figure 4 shows a joint produced with a nut of the present invention and a circular driver that has plowed furrows 60 through lobes 22. The joint includes the nut, a bolt 62, and workpieces 64 and 66. The joint has a predetermined preload on it effected by a clamp-up force of nut 10 and the head of bolt 62 on sheets 64 and 66, respectively. This preload correlates with the failure of lobe material in circumferential compression by balls of the driver.

Figure 5 shows a similar joint effected by a ball driver. However, instead of plowing furrow 60, the driver Brinnelled the lobes at 68 at a predetermined load. The Brinnelling represents the beginning of failure of the lobe, which if carried to completion would develop furrows 60. But Brinnelling 68 can correspond to a predetermined load.

Brinnelling instead of furrows can result at the same preload that produces the furrows if the race diameter of the ball of the driver is smaller. Obviously, the preload with signature can be changed with appropriate changes in the race diameter of the drivers. The nut can be re-torqued to the same value with drive balls on a race of smaller diameter, and the furrow will deepen; this can be done again and again. The number of retorquings can be determined by the drive sockets. This nut can also be re-torqued as necessary and with the retorque new Brinnell marks added.

Brinnelling or the furrows sign the nut so that an inspector knows that it has been tightened a predetermined amount.

The present invention has been described with reference to certain preferred embodiments. The scope of the appended claims should not, however, necessarily be limited to the foregoing description.

## Claims

1. A fastener (10) having internal threads (20) and being adapted to be wrenched in place against a workpiece (64, 66) by a standard flat sided wrenching tool (50), the fastener (10) comprising an axis (23), a plurality of axially extending lobes (22) on the fastener (10), each lobe (22) having arcuate curvature, the lobes (22) being designed to be deformed by compression at a predetermined preload, and a trough (26) between each of the lobes (22), the trough (26) having a base of radial dimension (40) less than the radial dimension of any of the arcuate surfaces of the lobes (22), **characterized by** the lobes (22) being arranged in a pattern bounded by an imaginary regular geometric figure concentric with the axis (23) of the fastener (10) with each straight side of the geometric figure being tangent to the surfaces of an associated adjacent pair of the lobes (22), and the radial dimension (40) of the base of the trough (26) being less than the minimum distance from a tangent (42) to the surfaces of adjacent lobes (22) and the axis (23), so that after being wrenched by the predetermined preload the lobes (22) have failed in circumferential compression in response to bearing by a spherically curved setting element and each of the lobes (22) includes either a circumferentially extending furrow (60) at a first radius at the predetermined preload or includes a Brinell mark (68) on the lobes (22) at a smaller radius at the same preload.

2. A fastener as claimed in claim 1 wherein the troughs (26) all have an axially extending surface that lies on a right cylinder having an axis concentric to the axis (23) of the fastener (10).

3. A fastener as claimed in claim 1 or 2 wherein the arcuate surface of each lobe (22) is right cylindrical.

4. A fastener as claimed in any one of the preceding claims wherein the arcuate surfaces of the lobes (22) are on tangent right cylinders (28) of equal diameter.

5. A fastener as claimed in any one of the preceding claims wherein there are six lobes (22).

6. A fastener as claimed in any one of the preceding claims further comprising a counterbore (21) in the base (14) of the fastener (10) the internal threads (20) opening into the counterbore (21), and a transition section (16) adjacent to the base (14).

7. A fastener as claimed in any one of the preceding claims wherein the external surface of each lobe (22) lies on its own right cylinder (28) of a radius equal to the radius of each of the other lobe right cylinders (28) and all the lobe right cylinders (28) have axes (30) lying on a common right cylinder (32) concentric to the axis (23) of the fastener (10); and
each trough (26) lies on the surface of a second right cylinder concentric with the axis (23) of the fastener (10), the radius (40) of the trough right cylinder being less than the radial distance from the axis (23) of the fastener (10) to any point on the surface of the lobes (22) but greater than the radius (36) of the common right cylinder and less than the minimum distance from the tangent (42) to the surfaces of adjacent lobes (22) and the axis (23).

8. A method for setting an internally threaded fastener (10) that has an axis (23), a plurality of axially extending lobes (22) on the fastener (10), each lobe (22) having arcuate curvature, the lobes (22) being arranged in a pattern bounded by an imaginary regular geometric figure concentric with the axis (23) and having straight sides with each side being tangent to the surfaces of an associated pair of the lobes (22) such that the lobes (22) can accept a standard flat sided wrenching tool (50), and a trough (26) between each of the lobes (22) having a base of radial dimension (40) less than the radial dimension of any of the arcuate surfaces of the lobes (22) and less than the minimum distance from the tangent (42) to the surfaces of adjacent lobes (22) and the axis (23), the method comprising the steps of:
tightening the fastener (10) to a predetermined preload on a cooperating externally threaded fastener (62) and in a joint against a workpiece (64, 66) by applying through at least one spherically curved setting element a circumferential compression to one of the lobes (22); and
terminating the tightening when only a portion of the axial length of the lobe (22) fails in circumferential compression by the spherically curved setting element engaging a surface of the lobe (22).

9. The method as claimed in claim 8 comprising terminating the tightening against the lobe (22) when a Brinell mark (68) is produced on the lobe (22) by the setting element.

10. The method claimed in either one of claims 8 or 9 comprising terminating the tightening against the lobe (22) when the setting element plows a furrow (60) through the lobe (22).

11. The method claimed in any one of claims 8 to 10 comprising retightening the fastener (10) with a standard flat sided wrenching tool acting on the lobes (22) after the first tightening.

## Patentansprüche

1. Befestiger (10) mit einen Innengewinde (20), das durch ein Standardschraubwerkzeug (50) mit flachen Seiten gegen ein Werkstück (64, 66) geschraubt werden kann, wobei der Befestiger (10) eine Achse (23), eine Mehrzahl von sich in Axialrichtung erstreckender Vorsprünge (22) am der Befestiger (10), wobei jeder Vorsprung (22) eine bogenförmige Krümmung aufweist, wobei die Vorsprünge (22) derart ausgebildet sind, daß sie durch den Druck bei einer vorbestimmten Vorlast deformiert werden können, und einen Trog (26) enthält, der zwischen jeden der Vorsprünge (22) angeordnet ist, wobei der Trog (26) eine Basis mit einer radialen Abmessung (40) aufweist, die geringer ist als die radiale Abmessung jeder der bogenförmgen Oberflächen der Vorsprünge (22), **dadurch gekennzeichnet**, daß die Vorsprünge (22) in einem Muster angeordnet sind, das begrenzt wird durch eine imaginäre, regelmäßige geometrische Figur, die konzentrisch mit der Achse (23) des Befestigers (10) ausgerichtet ist, wobei jede gerade Seite der geometrischen Figur tangential zu den Oberflächen eines zugeordneten, benachbarten Paares der Vorsprünge (22) angeordnet ist, und daß die radiale Abmessung (40) der Basis des Trogs (26) geringer ist als der kleinste Abstand zwischen einer Tangente (42) an die Oberflächen benachbarter Vorsprünge (22) und der Achse (23), so daß nach dem Aufschrauben mit der vorbestimmten Vorlast die Vorsprünge (22) in Reaktion auf den durch ein sphärisch gekrümmtes Montageelement ausgeübten Druck dem Umfangsdruck nachgegeben haben, und jede der Vorsprünge (22) entweder eine sich in Umfangsrichtung erstrekkende Furche (60) auf einem ersten Radius bei der vorbestimmten Vorlast oder eine Brinellmarke (68) an den Vorsprüngen (22) auf einem geringeren Radius bei der gleichen Vorlast aufweist.

2. Befestigunger nach Anspruch 1, wobei alle Tröge (26) eine sich axial erstreckende Oberfläche aufweisen, die auf einem aufrechten Zylinder liegen, der eine Achse aufweist, die konzentrisch zur Achse (23) des Befestigers (10) verläuft.

3. Befestiger nach Anspruch 1 oder 2, wobei die gekrümmte Oberfläche jedes Vorsprunges (22) die eines aufrechten Zylinders ist.

4. Befestiger nach einem der vorangegangenen Ansprüche, wobei die gekrümmten Oberflächen der Vorsprünge (22) sich auf tangentialen, aufrechten Zylindern (28) mit gleichem Durchmesser befinden.

5. Befestiger nach einem der vorstehenden Ansprüche, wobei sechs Vorsprünge (22) vorgesehen sind.

6. Befestiger nach einem der vorangegangenen Ansprüche, ferner enthaltend eine Gegenbohrung (21) in der Basis (14) des Befestigers (10), wobei sich das innere Gewinde (20) in die Gegenbohrung (21) öffnet, und einen Übergangsbereich (16) benachbart der Basis (14).

7. Befestiger nach einem der vorstehenden Ansprüche, wobei die äußere Oberfläche jedes Vorsprungs (22) auf ihrem eigenen, aufrechten Zylinder (28) liegt, wobei dieser Zylinder einen Radius aufweist, der gleich ist dem Radius jedes der anderen aufrechten Vorsprungs-Zylinder (28), und wobei die Achsen (30) aller aufrechten Vorsprungs-Zylinder (28) auf einem gemeinsamen, aufrechten Zylinder (32) liegen, der konzentrisch zur Achse (23) des Befestigers (10) verläuft, und
wobei jeder Trog (26) auf der Oberfläche eines zweiten aufrechten Zylinders liegt, der konzentrisch mit der Achse (23) des Befestigers (10) ist, wobei der Radius (40) des aufrechten Trog-Zylinders geringer ist als der radiale Abstand zwischen der Achse (23) des Befestigers (10) und jedem Punkt an der Oberfläche der Vorsprünge (22), jedoch größer ist als der Radius (36) des gemeinsamen aufrechten Zylinders und geringer als der Minimalabstand zwischen der Tangente (42) an den Oberflächen benachbarter Vorsprünge (22) und der Achse (23).

8. Verfahren zum Montieren eines Befestigers (10) mit Innengewinde, der eine Achse (23), eine Mehrzahl von sich in Axialrichtung erstreckender Vorsprünge (22) am Befestiger (10), wobei jeder Vorsprung (22) eine bogenförmige Krümmung aufweist, die Vorsprünge (22) in einem Muster angeordnet sind, das durch eine imagniäre, regelmäßige geometrische Figur begrenzt ist, die konzentrisch mit der Achse (23) verläuft und gerade Seiten aufweist, wobei jede Seite tangential zu den Oberflächen eines zusammengehörigen Paars der Vorsprünge (22) verläuft, so daß die Vorsprünge (22) ein standardisiertes Schraubwerkzeug (50) mit flachen Seiten aufnehmen können, und einen Trog (26) zwischen jedem der Vorsprünge (22) enthält, der eine Basis mit einer radialen Abmessung (40) aufweist, die geringer als die radiale Abmessung jeder der gekrümmten Oberflächen der Vorsprünge (22) und geringer als der Minimalabstand zwischen der Tangente (42) an den Oberflächen benachbarter Vorsprünge (22) und der Achse (23) ist, wobei das Verfahren die folgenden Verfahrensschritte enthält:
Festziehen des Befestigers (10) bis auf eine vorbestimmte Vorlast auf einem zugeordneten Befestiger (62) mit Außengewinde und in einer Verbindung gegen ein Werkstück (64, 66), indem durch mindestens ein sphärisch gekrümmtes Montageelement eine Umfangsdruckkraft auf einen der Vorsprünge (22) aufgebracht wird; und
Beendigung des Festziehens, wenn nur ein Teil der axialen Länge des Vorsprunges (22) dem Umfangsdruck durch das sphärisch gekrümmte Montageelement, das mit einer Oberfläche des Vorsprungs (22) in Eingriff steht, nicht mehr widersteht.

9. Verfahren nach Anspruch 8, umfassend die Beendigung des Festziehens gegen den Vorsprung (22), wenn durch das Montageelement am Vorsprung (22) eine Brinellmarke (68) erzeugt ist.

10. Verfahren nach einem der Ansprüche 8 oder 9, umfassend ein Beendigen des Festziehens gegen den Vorsprung (22), wenn das Montageelement eine Furche (60) durch den Vorsprung (22) zieht.

11. Verfahren nach einem der Ansprüche 8 bis 10, umfassend das nochmalige Festziehen des Befestigers (10) mit einem Standardschraubwerkzeug mit flachen Seiten, das nach dem ersten Festziehen an den Vorsprüngen (22) wirkt.

## Revendications

1. Elément de fixation (10) comportant un taraudage (20), et adapté pour être serré par une clé en place contre une pièce de structure (64, 66) en utilisant un outil de serrage (50) standard à flancs plats, l'élément de fixation (10) comportant un axe (23), une pluralité de lobes (22) s'étendant dans une direction axiale sur l'élément de fixation (10), chaque lobe (22) ayant une courbure arquée, les lobes (22) étant prévus pour être déformés par compression sous l'action d'une précharge prédéterminée, une encoche (26) étant ménagée entre chacun des lobes (22), l'encoche (26) ayant une base de dimension radiale (40) inférieure à la dimension radiale d'une quelconque des surfaces arquées des lobes (22), caractérisé par le fait que les lobes (22) sont agencés suivant une configuration limitée par une figure géométrique régulière virtuelle concentrique à l'axe (23) de l'élément de fixation (10), chacun des côtés droits de la figure géométrique étant tangent aux surfaces d'une paire adjacente associée des lobes (22), la dimension radiale (40) de la base de l'encoche (26) étant inférieure à la distance minimum qui sépare une tangente (42) des surfaces des lobes adjacents (22) et de l'axe (23), de telle sorte que, après serrage sous une précharge prédéterminée, les lobes (22) sont l'objet d'une défaillance sous un effort de compression circonférentiel en réponse à un effort de portée exercé par un élément de serrage incurvé sphérique, chacun des lobes (22) comportant soit un sillon s'étendant dans une direction circonférentielle suivant un premier rayon sous la précharge prédéterminée, soit une trace de Brinell (68) sur les lobes (22) suivant un rayon plus petit sous la même précharge.

2. Elément de fixation selon la revendication 1, dans lequel les encoches (26) comportent toutes une surface s'étendant dans une direction axiale située sur un cylindre droit dont l'axe est concentrique à l'axe (23) de l'élément de fixation (10).

3. Elément de fixation selon les revendications 1 ou 2, dans lequel la surface arquée de chaque lobe (22) est de forme cylindrique droite.

4. Elément de fixation selon l'une quelconque des revendications précédentes, dans lequel les surfaces arquées des lobes (22) sont situées sur des cylindres droits tangents (28) de diamètre égal.

5. Elément de fixation selon l'une quelconque des revendications précédentes, comportant six lobes (22).

6. Elément de fixation selon l'une quelconque des revendications précédentes, comportant en outre un contre-alésage (21) ménagé dans la base (14) de l'élément de fixation (10), le taraudage (20) s'ouvrant dans le contre-alésage (21), et une section de transition (16) adjacente à la base (14).

7. Elément de fixation selon l'une quelconque des revendications précédentes, dans lequel la surface extérieure de chaque lobe (22) est située sur son propre cylindre droit (28) d'un rayon égal au rayon de chacun des cylindres droits (28) des autres lobes, les axes (30) des cylindres droits (28) de tous les lobes étant situés sur un cylindre droit commun (32) concentrique à l'axe (23) de l'élément de fixation (10) ; et
chaque encoche (26) est située sur la surface d'un deuxième cylindre droit concentrique à l'axe (23) de l'élément de fixation (10), le rayon (40) du cylindre droit correspondant aux encoches étant inférieur à la distance radiale comptée depuis l'axe (23) de l'élément de fixation (10) jusqu'à un point quelconque situé sur la surface des lobes (22) mais supérieur au rayon (36) du cylindre droit commun et inférieur à la distance minimum qui sépare la tangente (42) des surfaces des lobes adjacents (22) à l'axe (23).

8. Procédé de montage d'un élément de fixation taraudé (10) ayant un axe (23), une pluralité de lobes (22) s'étendant dans une direction axiale sur l'élément de fixation (10), chaque lobe (22) ayant une courbure arquée, les lobes (22) étant disposés suivant une configuration limitée par une figure géométrique régulière virtuelle concentrique à l'axe (23) et ayant des côtés droits, chacun des côtés étant tangent aux surfaces d'une paire de lobes (22) associés, de telle sorte que les lobes (22) peuvent s'adapter à un outil de serrage (50) standard à flancs plats, une encoche (26) étant ménagée entre chacun des lobes (22) et comprenant une base de dimension radiale (40) inférieure à la dimension radiale d'une quelconque des surfaces arquées des lobes (22) et inférieure à la distance minimum qui sépare la tangente (42) des surfaces des lobes adjacents (22) et de l'axe (23), le procédé comportant les étapes qui consistent :
à serrer l'élément de fixation (10) jusqu'à une précharge prédéterminée sur un élément de fixation fileté associé (62) et dans un joint portant contre une pièce de structure (64, 66), en appliquant par au moins un élément de serrage incurvé sphérique un effort de compression circonférentiel sur l'un des lobes (22) ; et
à compléter le serrage lorsque seule une portion de la longueur axiale du lobe (22) est l'objet d'une défaillance due à une compression circonférentielle sous l'action de l'élément de serrage incurvé sphérique en prise avec une surface du lobe (22).

9. Procédé selon la revendication 8, comportant l'étape qui consiste à compléter le serrage contre le lobe (22) lorsqu'une trace de Brinell (68) se produit sur le lobe (22) par l'élément de serrage.

10. Procédé selon l'une quelconque des revendications 8 ou 9, comportant l'étape qui consiste à compléter le serrage contre le lobe (22) lorsque l'élément de serrage creuse un sillon (60) à travers le lobe (22).

11. Procédé selon l'une quelconque des revendications 8 à 10, comportant l'étape qui consiste à resserrer l'élément de fixation (10) au moyen d'un outil de serrage standard à flancs plats qui agit sur les lobes (22) après un premier serrage.
